# EUROPEAN PATENT APPLICATION

(11) **EP 4 475 538 A1**
(43) Date of publication of application: **11.12.2024**
(21) Application number: 24174482.0
(22) Date of filing: 07.05.2024
(51) Int. Cl.: H04N 21/4627, H04N 21/8358

(54) **IDENTIFYING CONSTRAINTS ON MEDIA CONTENT USAGE USING WATERMARKS**

(30) Priority: 09.06.2023 US 202318207920
(71) Applicant: Disney Enterprises, Inc., Burbank, CA 91521 (US)
(72) Inventor: Arana, Mark, Burbank, 91521 (US); Stanley, Anthony, Burbank, 91521 (US)
(74) Representative: Dr. Weitzel & Partner

(57) **Abstract**

A system includes a hardware processor and a system memory storing a software code. The hardware processor configured to execute the software code to receive a media content, receive a command to perform an action using the media content, and inspect the media content for a presence of a watermark. The hardware processor is further configured to execute the software code to identify, when inspecting reveals an absence of the watermark, a first business rule corresponding to the absence of the watermark, identify, when inspecting reveals the presence of the watermark, a second business rule corresponding to the presence of the watermark, and permit or prevent executing the command to perform the action in response to identifying the first business rule or the second business rule.

## Description

The present invention refers to a method and system for identifying constraints on media content usage using watermarks.

### BACKGROUND

Due to its nearly universal popularity as a content medium, ever more audio-video (AV) content is being produced and distributed to consumers. As a result, the efficiency with which the appropriate use of audio and video content can be managed has become increasingly important to the producers, owners, and distributors of that content.

Moreover, a producer of AV content may wish to impose constraints on the use of that content using a mechanism other than traditional digital rights management (DRM) technologies. For example, a producer or distributor of AV content may want to limit the number of times a particular AV content title, such as a movie for example, can be played out or copied, or to restrict playout of that content to certain types of end user systems, but not others. In addition, it may be advantageous or desirable to embed instructions identifying the constraints on the use of such content in the content itself, so that a separate communication channel for transmitting those constraints to the end user systems is not necessary. Consequently, there is a need in the art for a content management solution that embeds information identifying constraints on the use of media content in the media content itself without negatively affecting the experience of a consumer of that content.

The present invention is defined by the features of the independent claims. The dependent claims describe preferred embodiments.

According to an embodiment of the present invention, a method for use in a system comprises:
receiving, by the software code executed by the hardware processor, a media content;
receiving a command to perform an action using the media content;
inspecting the media content for a presence of a watermark;
identifying when inspecting reveals an absence of the watermark, a first business rule corresponding to the absence of the watermark;
identifying when inspecting reveals the presence of the watermark, a second business rule corresponding to the presence of the watermark; and
permitting or preventing executing of the command to perform the action, in response to identifying the first business rule or the second business rule.

Preferably, the business rules may also be termed as access rights to the media content. Thus, inter alia, the method may correspondingly comprise identifying when inspecting reveals an absence of the watermark, first access rights corresponding to the absence of the watermark; and identifying when inspecting reveals the presence of the watermark, second access rights corresponding to the presence of the watermark, and permitting or preventing executing of the command to perform the action, in response to identifying the first access rights or the second access rights.

Preferably the method, wherein the media content comprises audio-video (AV) content.

Preferably the method, wherein the watermark comprises:
(i) at least one visual watermark imperceptible to a human viewer of the media content;
(ii) at least one audio watermark imperceptible to the human viewer of the media content; or
(iii) at least one visual watermark and at least one audio watermark each imperceptible to the human viewer of the media content.

Preferably the method, wherein inspecting the media content is performed at one or more predetermined locations within the AV content for the presence of the watermark.

Preferably the method, wherein the one or more predetermined locations comprise predetermined regions within each of at least some video frames of the AV content or a predetermined timestamp of an audio track of the AV content.

Preferably the method, further comprising:
supplementing or modifying the watermark, in response to executing the command to perform the action.

Preferably the method, wherein supplementing the watermark comprises inserting an additional watermark at a predetermined location within the media content, and wherein modifying the watermark comprises replacing the watermark with another watermark.

Preferably the method, wherein the action comprises playout of the media content, and wherein supplementing or modifying the watermark occurs:
(i) after playout of a predetermined first segment of the media content;
(ii) during or after playout of a predetermined last segment of the media content; or
(iii) at a plurality of predetermined intervals during playout of the media content.

Preferably the method, wherein the second business rule permits or prevents at least one of playout of the media content using a media player, transmission of the media content to another system for playout, or copying the media content to another system.

Preferably the method, wherein the second business rule specifies one or more types of systems by which playout of the media content is permitted.

According to an embodiment of the present invention, a system comprises a hardware processor and a system memory storing a software code, the hardware processor being adapted to execute the software to perform the method as disclosed herein.

According to an embodiment of the present invention, a system comprises:
a hardware processor; and
a system memory storing a software code;
the hardware processor configured to execute the software code to:
   receive a media content;
   receive a command to perform an action using the media content;
   inspect the media content for a presence of a watermark;
   identify, when inspecting reveals an absence of the watermark, a first business
rule corresponding to the absence of the watermark;
   identify, when inspecting reveals the presence of the watermark, a second business rule corresponding to the presence of the watermark; and
   permit or prevent executing the command to perform the action in response to identifying the first business rule or the second business rule.

Preferably the system, wherein the media content comprises audio-video (AV) content.

Preferably the system, wherein the watermark comprises:
(i) at least one visual watermark imperceptible to a human viewer of the media content;
(ii) at least one audio watermark imperceptible to the human viewer of the media content; or
(iii) at least one visual watermark and at least one audio watermark each imperceptible to the human viewer of the media content.

Preferably the system, wherein inspecting the media content is performed at one or more predetermined locations within the AV content for the presence of the watermark.

Preferably the system, wherein the one or more predetermined locations comprise predetermined regions within each of at least some video frames of the AV content or a predetermined timestamp of an audio track of the AV content.

Preferably the system, wherein the watermark is inserted into the media content by a creator or a distributor of the media content, and wherein the hardware processor is further configured to:
supplement or modify the watermark in response to executing the command to perform the action.

Preferably the system, wherein supplementing the watermark comprises inserting an additional watermark at a predetermined location within the media content, and wherein modifying the watermark comprises replacing the watermark with another watermark.

Preferably the system, wherein the action comprises playout of the media content, and wherein the watermark is supplemented or modified:
(i) after playout of a predetermined first segment of the media content;
(ii) during or after playout of a predetermined last segment of the media content; or
(iii) at a plurality of predetermined intervals during playout of the media content.

Preferably the system, wherein the second business rule permits or prevents at least one of playout of the media content using a media player, transmission of the media content to another system for playout, or copying the media content to another system.

Preferably the system, wherein the second business rule specifies one or more types of systems by which playout of the media content is permitted.

According to an embodiment of the invention, a method for use by a system including a hardware processor and a system memory storing a software code, the method comprising:
receiving, by the software code executed by the hardware processor, a media content;
receiving, by the software code executed by the hardware processor, a command to perform an action using the media content;
inspecting, by the software code executed by the hardware processor, the media content for a presence of a watermark;
identifying, by the software code executed by the hardware processor, when inspecting reveals an absence of the watermark, a first business rule corresponding to the absence of the watermark;
identifying, by the software code executed by the hardware processor, when inspecting reveals the presence of the watermark, a second business rule corresponding to the presence of the watermark; and
permitting or preventing executing of the command to perform the action, by the software code executed by the hardware processor, in response to identifying the first business rule or the second business rule.

Preferably the method, wherein the media content comprises audio-video (AV) content.

Preferably the method, wherein the watermark comprises:
(i) at least one visual watermark imperceptible to a human viewer of the media content;
(ii) at least one audio watermark imperceptible to the human viewer of the media content; or
(iii) at least one visual watermark and at least one audio watermark each imperceptible to the human viewer of the media content.

Preferably the method, wherein inspecting the media content is performed at one or more predetermined locations within the AV content for the presence of the watermark.

Preferably the method, wherein the one or more predetermined locations comprise predetermined regions within each of at least some video frames of the AV content or a predetermined timestamp of an audio track of the AV content.

Preferably the method, further comprising:
supplementing or modifying the watermark, by the software code executed by the hardware processor, in response to executing the command to perform the action.

Preferably the method, wherein supplementing the watermark comprises inserting an additional watermark at a predetermined location within the media content, and wherein modifying the watermark comprises replacing the watermark with another watermark.

Preferably the method, wherein the action comprises playout of the media content, and wherein supplementing or modifying the watermark occurs:
(i) after playout of a predetermined first segment of the media content;
(ii) during or after playout of a predetermined last segment of the media content; or
(iii) at a plurality of predetermined intervals during playout of the media content.

Preferably the method, wherein the second business rule permits or prevents at least one of playout of the media content using a media player, transmission of the media content to another system for playout, or copying the media content to another system.

Preferably the method, wherein the second business rule specifies one or more types of systems by which playout of the media content is permitted.

### BRIEF DESCRIPTION OF THE DRAWINGS

Figure 1 shows a diagram of an exemplary media content distribution environment, according to one implementation;
Figure 2 shows a more detailed diagram of media content transfer between two of the user systems depicted in Figure 1, according to one implementation;
Figure 3A shows an exemplary video frame of media content including predetermined locations for watermarks identifying constraints on the use of the media content, according to one implementation;
Figure 3B shows an exemplary video frame of the media content of Figure 3A after a first playout of the media content by a user system receiving the media content, according to one implementation; and
Figure 4 shows a flowchart outlining an exemplary method for identifying constraints on media content usage using watermarks, according to one implementation.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses systems and methods for identifying constraints on media content usage using watermarks. It is noted that although the present novel and inventive concepts are described below in detail by reference to audio-video (AV) content, that implementation is merely provided by way of example. More generally, the present solution for identifying constraints on media content usage using watermarks may be advantageously applied to media content in the form of video unaccompanied by audio, audio content unaccompanied by video, as well as one or more of audio or video content in combination with text, metadata, or both text and metadata.

In addition, or alternatively, in some implementations, the media content to which the solution for identifying constraints on media content usage using watermarks disclosed by the present application may be applied may be or include digital representations of persons, fictional characters, locations, objects, and identifiers such as brands and logos, for example, which populate a virtual reality (VR), augmented reality (AR), or mixed reality (MR) environment. Moreover, that content may depict virtual worlds that can be experienced by any number of users synchronously and persistently, while providing continuity of data such as personal identity, user history, entitlements, possessions, payments, and the like. It is noted that the solution for identifying constraints on media content usage using watermarks disclosed by the present application may also be applied to media content that is a hybrid of traditional audio-video and fully immersive VR/AR/MR experiences, such as interactive video.

Moreover, in various implementations, the systems and methods disclosed by the present application may advantageously be substantially or fully automated. As used in the present application, the terms "automation," "automated," and "automating" refer to systems and processes that do not require the participation of a human system user. Thus, the methods described in the present application may be performed under the control of hardware processing components of the disclosed automated systems.

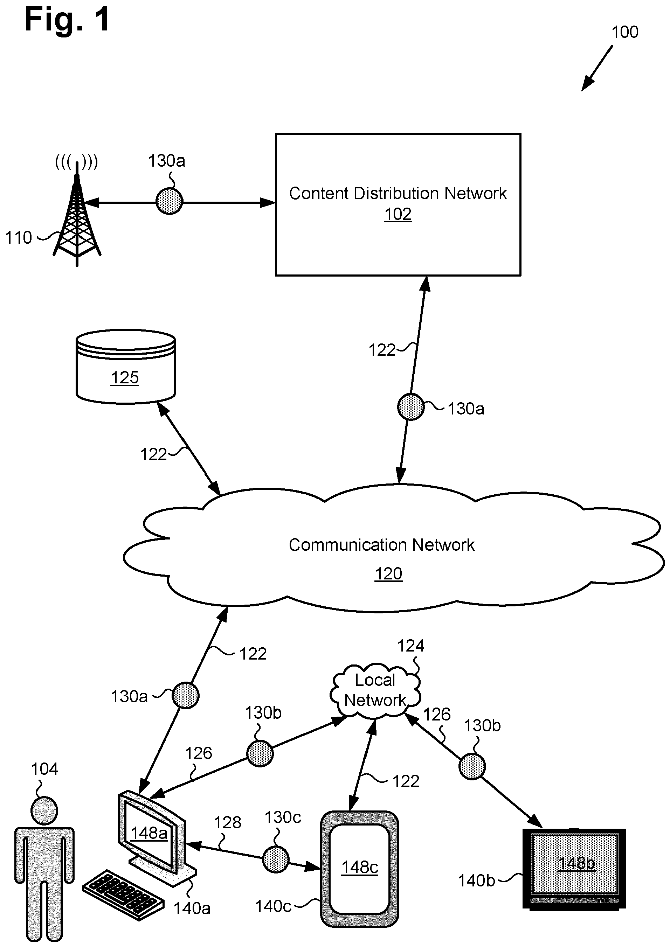

Figure 1 shows exemplary content distribution environment 100, according to one implementation. As shown in Figure 1, content distribution environment 100 including media content source 110 of media content 130a, such as a broadcast source of media content 130a for example. As further shown in Figure 1, in some use cases, media content source 110 may find it advantageous or desirable to make media content 130a available via an alternative distribution mode, such as communication network 120, which may take the form of a packet-switched network, for example, such as the Internet. For instance, content distribution network (CDN) 102 may be utilized by media content source 110 to distribute media content 130a as part of a content stream, which may be an Internet Protocol (IP) content stream provided by a streaming service, or a video-on-demand (VOD) service, for example.

Content distribution environment 100 also includes business rules database 125, user systems 140a, 140b, and 140c (hereinafter "user systems 140a-140c") each having a respective optional display 148a, 148b, and 148c (hereinafter "displays 148a-148c"), and user 104 of one or more of user systems 140a-140c. With respect to user systems 140a-140c, it is noted that although Figure 1 depicts three user systems, that representation is merely by way of example. In other implementations, user systems 140a-140c may include as few as one user system, or more than three user systems. It is further noted that although business rules database 125 is shown to be remote from user systems 140a, 140b, and 140c in Figure 1, that representation is provided merely by way of example. In other implementations, instantiations of business rules database 125 may be stored locally by the memory resources of each of user systems 140a, 140b, and 140c. Also shown in Figure 1 are network communication links 122 of communication network 120, network 124 local to user systems 140a-140c, such as a home network for example, (hereinafter "local network 124), local network communication links 126 of local network 124, direct wired or wireless communication link 128 between user system 140a and user system 140b, and watermarked versions 130b and 130c of media content 130a (hereinafter "watermarked media content 130b" and "watermarked media content 130c").

Although user systems 140a-140c are shown variously as desktop computer 140a, smartphone 140b, and smart television (smart TV) 140c, in Figure 1, those representations are provided merely by way of example. In other implementations, user systems 140a-140c may take the form of any suitable mobile or stationary computing devices or systems that implement data processing capabilities sufficient to support connections to communication network 120, communicate with a media player configured to automate playback of media content 130a or watermarked media content 130b or 130c, and implement the functionality ascribed to user systems 140a-140c herein. That is to say, in other implementations, one or more of user systems 140a-140c may take the form of a set-top box, laptop computer, tablet computer, digital media player, game console, or a wearable communication device such as a smartwatch, AR viewer, or VR headset, to name a few examples.

With respect to displays 148a-148c, it is noted that displays 148a-148c may take the form of liquid crystal displays (LCDs), light-emitting diode (LED) displays, organic light-emitting diode (OLED) displays, quantum dot (QD) displays, or any other suitable display screens that perform a physical transformation of signals to light. In various implementations, displays 148a-148c may be physically integrated with respective user systems 140a-140c or may be communicatively coupled to but physically separate from respective user systems 140a-140c. For example, where user system systems 140a-140c are implemented as smart TVs, smartphones, laptop computers, tablet computers, AR viewers, or VR headsets, displays 148a-148c will typically be integrated with respective user systems 140a-140c. By contrast, where user systems 140a-140c are implemented as desktop computers, displays 148a-148c may take the form of monitors separate from respective user systems 140a-140c in the form of computer towers. Moreover, it is noted that in some use cases, one or more of user systems 140a-140c may omit a display, such as when a user system takes the form of a set-top box, for example.

In some implementations, media content source 110 may be a media entity providing media content 130a. Media content 130a may include content from a linear TV program stream, for example, that includes a high-definition (HD) or ultra-HD (UHD) baseband video signal with embedded audio, captions, time code, and other ancillary metadata, such as ratings and/or parental guidelines. In some implementations, media content 130a may also include multiple audio tracks, and may utilize secondary audio programming (SAP) and/or Descriptive Video Service (DVS), for example. Alternatively, in some implementations, media content 130a may be video game content. As yet another alternative, and as noted above, in some implementations media content 130a may be or include digital representations of persons, fictional characters, locations, objects, and identifiers such as brands and logos, for example, which populate a VR, AR, or MR environment. Moreover, media content 130a may depict virtual worlds that can be experienced by any number of users synchronously and persistently, while providing continuity of data such as personal identity, user history, entitlements, possessions, payments, and the like. As also noted above, media content 130a may be or include content that is a hybrid of traditional audio-video and fully immersive VR/AR/MR experiences, such as interactive video.

In some implementations, media content 130a may be the same source video that is broadcast to a traditional TV audience. Thus, media content source 110 may take the form of a conventional cable and/or satellite TV network, for example. As noted above, media content source 110 may find it advantageous or desirable to make media content 130a and automation instruction(s) 168 for media content 130a available via an alternative distribution mode, such as communication network 120, which may take the form of a packet-switched network, for example, such as the Internet, as also noted above. Alternatively, or in addition, although not depicted in Figure 1, in some use cases media content 130a may be distributed on a physical medium, such as a DVD, Blu-ray Disc^{®}, or FLASH drive, for example.

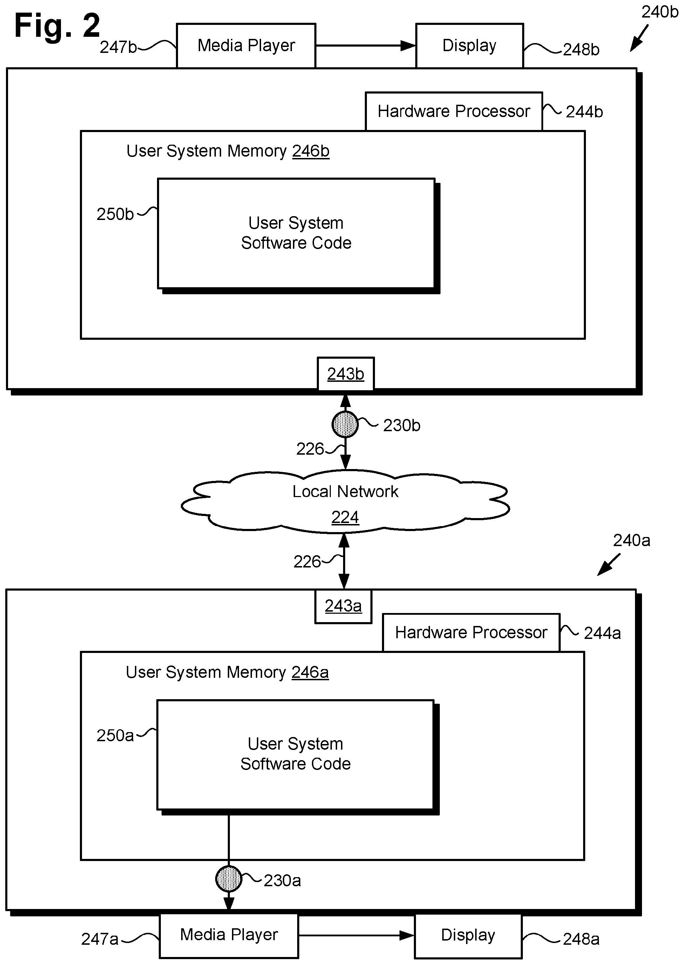

According to the exemplary implementation shown in Figure 1, user system 140a receives media content 130a from CDN 102, via communication network 120 and network communication links 122. Media content 130a may include one or more watermarks (hereinafter "watermark(s)") each identifying a respective constraint on the usage of media content 130a, or may be entirely free of any such watermark(s). As further described below by reference to Figures 2, 3A, 3B, and 4, user system 140a may then receive a command from user 104 of user system 140a to perform an action using media content 130a. Examples of those actions may include playing out media content 130a on display 148a of user system 140a, transmitting media content 130a for display by another user system, such as user system 140b for example, or copying user media content 130a to another user system such as user system 140c.

It is noted that, as defined in the present application, the expressions "transmitting media content" and "transferring media content" each refers to transfer of a single copy of the media content, without replication of that content. Thus, media content transmitted or otherwise transferred from user system 140a to user system 140c resides only on user system 140a prior to transmission or transfer, and resides only user system 140c subsequent to transmission or transfer. By contrast, copying of media content 130a results in replication of that media content. Consequently, copying of media content from user system 140a to user 140c results in duplicate copies of the media content residing on each of user systems 140a and 140c.

In response to receiving the command, user system 140a is configured to inspect media content 130a for the presence of watermark(s). When that inspection reveals an absence of watermark(s) in media content 130a, user system 140a is configured to identify a business rule for media content 130a corresponding to the absence of the watermark(s). When that inspection reveals the presence of watermark(s) in media content 130a, user system 140a is configured to identify one or more other business rules (hereinafter "other business rule(s)") for media content 130a corresponding to the presence of the watermark(s). User system 140a is further configured to permit or prevent execution of the command to perform the action in response to identifying the business rule or the other business rule(s). Moreover, when execution of the command to perform the action is permitted, user system 140a is further configured to watermark media content 130a, or to modify an existing watermark of media content 130a, to signify that the commanded action is being or has been performed, thereby providing watermarked media content 130b or 130c.

Figure 2 shows a more detailed diagram of transfer of watermarked content 230b from user system 240a to user system 240b via local network 224 and local network communication links 226, according to one implementation. As shown in Figure 2, user system 240a includes transceiver 243a, hardware processor 244a, user system memory 246a implemented as a computer-readable non-transitory storage medium, optional media player 247a, and optional display 248a. As further shown in Figure 2, user system 240b includes transceiver 243b, hardware processor 244b, user system memory 246b implemented as a computer-readable non-transitory storage medium, optional media player 247b, and optional display 248b. According to the present exemplary implementation, user system memory 246a stores user system software code 250a, while user system memory 246b stores user system software code 250b.

Local network 224, local network communication links 226, and watermarked media content 230b correspond respectively in general to local network 124, local network communication links 126, and watermarked media content 130b, in Figure 1. In other words, local network 124, local network communication links 126, and watermarked media content 130b may share any of the characteristics attributed to respective local network 224, local network communication links 226, and watermarked media content 230b by the present disclosure, and vice versa.

User system 240a and optional display 248a correspond respectively in general to user system 140a and optional display 148a, in Figure 1, while user system 240b and optional display 248b correspond respectively in general to user system 140b and optional display 148b, in Figure 1. Thus, user systems 140a and 140b, and optional displays 148a and 148b may share any of the characteristics attributed to respective user systems 240a and 240b, and optional displays 248a and 248b by the present disclosure, and vice versa. That is to say, like optional displays 148a and 148b, optional displays 248a and 248b may take the form of LCDs, LED displays, OLED displays, or QD displays, for example. Moreover, although not shown in Figure 1, user system 140a may include features corresponding respectively to transceiver 243a, optional media player 247a, hardware processor 244a, and user system memory 246a storing user system software code 250a, and user system 140b may include features corresponding respectively to transceiver 243b, optional media player 247b, hardware processor 244b, and user system memory 246b storing user system software code 250, while user system 140c may include analogous features.

Although the present application refers to user system software code 250a and 250b, as being stored in respective user system memories 246a and 246b for conceptual clarity, more generally, each of user system memories 246a and 246b may take the form of any computer-readable non-transitory storage medium. The expression "computer-readable non-transitory storage medium," as used in the present application, refers to any medium, excluding a carrier wave or other transitory signal that provides instructions to hardware processor 244a or 244b of respective user systems 140a/240a and 140b/240b. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs such as DVDs, RAM, programmable read-only memory (PROM), erasable PROM (EPROM), and FLASH memory.

Each of hardware processors 244a and 244b may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of user systems 140a/240a and 140b/240b, as well as a Control Unit (CU) for retrieving programs, such as user system software code 250a and 250b, from respective user system memories 246a and 246b, while a GPU may be implemented to reduce the processing overhead of the CPU by performing computationally intensive graphics or other processing tasks. A TPU is an application-specific integrated circuit (ASIC) configured specifically for artificial intelligence (AI) processes such as machine learning.

Transceivers 243a and 243b of respective user systems 240a and 240b may be implemented as any suitable wireless communication units. For example, transceivers 243a and 243b may be implemented as fourth generation (4G) wireless transceivers, or as 5G wireless transceivers. In addition, or alternatively, transceivers 243a and 243b may be configured for communications using one or more of Wireless Fidelity (Wi-Fi), Worldwide Interoperability for Microwave Access (WiMAX), Bluetooth, Bluetooth low energy, ZigBee, radio-frequency identification (RFID), near-field communication (NFC), and 60 GHz wireless communications methods.

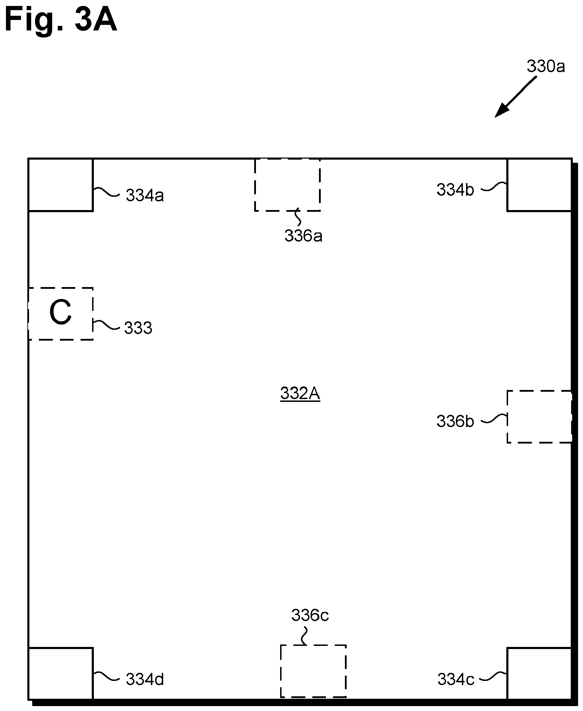

Figure 3A shows exemplary video frame 332A of media content 330a including predetermined locations for watermarks identifying constraints on the use of media content 330a, according to one implementation. It is noted that media content 330a including video frame 332A corresponds in general to media content 130a, in Figure 1. Consequently, media content 130a may share any of the characteristics attributed to media content 330a including video frame 332A by the present disclosure, and vice versa.

According to the exemplary implementation shown in Figure 3A video frame 332A of media content 330a includes predetermined locations for a plurality of different types of watermarks communicating a respective plurality of different types of constraints on the usage of media content 330a. For example, location 333 may be predetermined for a watermark identifying the type or types of systems by which playout of media content 330a is permitted. The presence of the watermark "A," for example, may restrict playout of media content 330a to mobile device platforms, while the presence of watermark "B," may restrict playout of media content 330a to another specific class of user systems exclusive of mobile devices. By contrast, the presence of the watermark "C," as shown in Figure 3A, may indicate that media content 330a is compatible with playout by any device. Moreover, the absence of a system type watermark at predetermined location 333 may indicate the absence of any restrictions on the types of user systems by which media content 330a is permitted to be played out.

By contrast, locations 334a, 334b, 334c, and 334d may be predetermined as signifiers for the total number of times media content 330a can be played out. For example, the presence of four predetermined locations 334a, 334b, 334c, and 334d for playout watermarks may indicate that media content 330a may be played out a total of four times. Moreover, the absence of a watermark at any of predetermined locations 334a, 334b, 334c, or 334d indicate that media content 330a has not yet been played out and is thus presently eligible for playout by a user system.

Locations 336a, 336b, and 336c may be predetermined as signifiers for the total number of times media content 330a can be copied. For example, the presence of three predetermined locations 336a, 336b, and 336c for copy watermarks may indicate that media content 330a may be copied a total of three times. Moreover, the absence of a watermark at any of predetermined locations 336a, 336b, or 336c indicate that media content 330a has not yet been copied and is thus presently eligible for copying.

It is noted that although the exemplary implementation shown in Figure 3A includes four predetermined locations for playout watermarks and three predetermined locations for copy watermarks, that representation is merely provided by way of example. In other implementations media content 330a may include more, or fewer, than four predetermined locations for playout watermarks and more, or fewer, than three predetermined locations for copy watermarks. It further noted that in various implementations, media content 330a may omit one, several, or all of predetermined location 333 for a system type watermark, predetermined locations 334a, 334b, 334c, and 334d for playout watermarks, and predetermined locations 336a, 336b, and 336c for copy watermarks. Furthermore, in implementations in which media content includes one or more of predetermined locations 334a, 334b, 334c, or 334d for playout watermarks and one or more of predetermined locations 336a, 336b, and 336c for copy watermarks, the number of predetermined locations 334a, 334b, 334c, and 334c may be the same, or different, than the number of predetermined locations 336a, 336b, and 336c.

Moreover, although Figure 3A depicts predetermined locations for a system type watermark, playout watermarks, and copy watermarks, that representation is provided merely by way of example. In other implementations, other types of watermarks may be used. For instance, in one use case, watermarks indicating how many times media content 330a has been transferred from one user system to another may be present in media content 330a. In addition, or alternatively, in some implementations media content 330a may include video baseband watermarks or overlays that can specify a variety of usage rules such as playout, resolution restriction, copying, and downloading, to name a few examples.

Media content 330a may be AV content including video frame 332A having one or more of predetermined locations 333, 334a, 334b, 334c, 334d, 336a, 336b, and 336c for watermark(s). According to the exemplary implementation shown in Figure 3A, those watermark(s) are visual watermarks that are nevertheless each imperceptible to a human viewer of media content 330a, although in other implementations the visual watermarks may be perceptible to the human viewer of media content 330a. Predetermined locations 333, 334a, 334b, 334c, 334d, 336a, 336b, and 336c are predetermined regions of video frame 332A. Moreover, predetermined locations 333, 334a, 334b, 334c, 334d, 336a, 336b, and 336c may be present in all video frames of media content 330a, or in a subset of the video frames included in media content 330a, such as the first reel of video frames, every other video frame, every tenth video frame, or any other selected subset of media content 330a.

Alternatively, or in addition, the watermark(s) included in media content 330a may include one or more audio watermarks imperceptible to a human viewer of media content 330a, although in other implementations the audio watermarks may be perceptible to the human viewer of media content 330a. Thus, in various implementations, media content 330a may include one or more visual watermarks, one or more audio watermarks, or one or more visual watermarks and one or more audio watermarks. It is noted that in implementations in which media content 330a includes one or more audio watermarks, the predetermined locations for those one or more audio watermarks could be respective predetermined timestamps of an audio track of media content 330a.

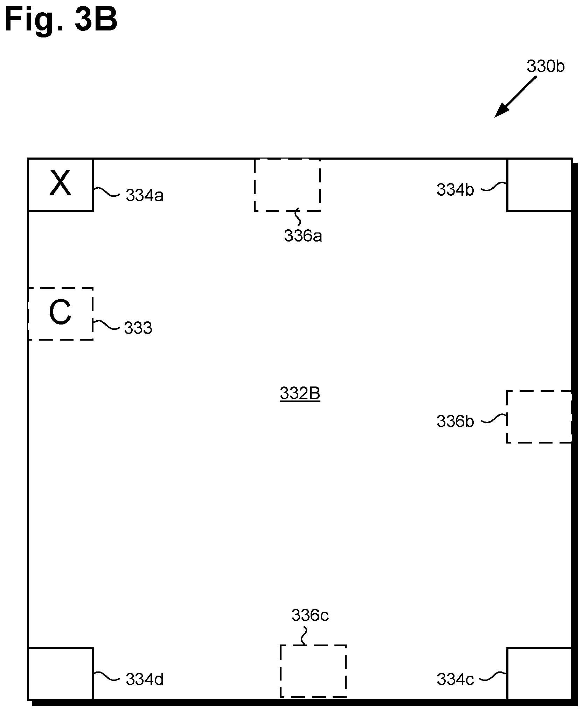

Referring to Figure 3B in combination with Figure 1 and 3A, Figure 3B shows exemplary video frame 332B of watermarked media content 330b after a first playout of media content 330a, by user system 140a receiving media content 130a/330a, according to one implementation. It is noted that video frame 332B carries the same primary content payload as video frame 332A, in Figure 3A. The only difference between video frames 332B and 332A is the presence, at predetermined location 334a, of watermark "X."

It is further noted that watermarked media content 330b including video frame 332B corresponds in general to watermarked media content 130b, in Figure 1. Consequently, watermarked media content 130b may share any of the characteristics attributed to watermarked media content 330b including video frame 332B by the present disclosure, and vice versa. It is further noted that any features identified by reference numbers identical to those appearing in previous Figure 3A correspond respectively to those previously described features and my include any of the characteristics attributed to those corresponding features by the present disclosure.

After a first playout of media content 130a/330a by user system 140a, media content 130a/330a is watermarked "X" by user system 140a at predetermined location 334a (i.e., a predetermined location for a playout watermark) to indicate that watermarked media content 130b/330b has been played out one time. The remaining number of predetermined locations for a playout watermark that do not include a watermark are indicative of the number of remaining playouts permitted. Continuing with the example in Fig. 3B, the watermarked media content 130b/330b is still eligible for playout by user system 140a or another user system, up to three more times, as indicated by the absence of a watermark at predetermined locations 334b, 334c, and 334d for a playout watermark. Thus, a first playout of media content 130a/330a results in the inclusion of a watermark, for example "X," at predetermined location 334a of watermarked media content 130b/330b, thereby embedding a playout watermark in media content 130a/330a. When, as shown in Figure 1, watermarked media content 130b/330b is transferred from user system 140a to user system 140b, user system 140b may inspect watermarked media content 130b/330b for the presence of watermark(s), may identify watermarked media content 130b/330b as 1) permitted to be played out on any type of user system based on the system type watermark "C" at predetermined location 333, 2) having been played out once based on the presence of a playout watermark at predetermined location 334a, and 3) eligible for playout three more times based on the absence of a playout watermark at any of predetermined locations 334b, 334c, or 334d. In addition, user system 140b may identify watermarked media content 130b/330b as eligible for copying three times based on the absence of a copy watermark at any of predetermined locations 336a, 336b, or 336c. A subsequent playout of watermarked media content 130b/330b by user system 140b would result in inclusion of a second playout watermark at predetermined location 334b, and so forth.

It is noted that the number, appearance, and locations of the exemplary watermarks shown in and described by reference to Figures 3A and 3B are merely by way of example. In some alternative implementations, the media content may include a single predetermined location for a playout watermark and/or a copy watermark, and the appearance of the watermark may change each time the media content is played out or copied. For instance, prior to a first playout of the media content, the playout watermark "I" inserted at one of predetermined locations 334a, 334b, 334c, or 334d by a creator or distributor of the media content may serve to indicate that the media content has not previously been played out. A first playout of the media content by one of user systems 140a/240a, 140b240b, or 140c, in Figures 1 and 2, may result in the playout watermark "I" being erased by the user system performing the first playout and may be replaced by the playout watermark "J." A second playout of the media content may result in the playout watermark "J" being erased by the user system performing the second playout and replaced by the playout watermark "K," and so forth. As yet another exemplary alternative, a first playout of the media content may result in a watermark in the form of a single dot or other symbol being inserted at predetermined location 334a, 334b, 334c, or 334d, while a second playout of the media content results in a second dot or other symbol being inserted at the same predetermined location, and so forth.

Thus, in various implementations, one or more watermarks may be inserted into media content by a creator or a distributor of the media content, and may subsequently be supplemented or modified by a user system that plays out, copies, or transfers the media content. Moreover, and as noted above, supplementing a watermark may include inserting an additional watermark at a predetermined location within the media content, while modifying a watermark may include replacing a watermark with another watermark.

With respect to the timing of watermark insertion, various different alternatives are contemplated. In the case of playout watermarks, for example, in some use cases the media content may be watermarked as having been played out when the first frame or predetermined first sequence of frames of the media content are played out. In other implementations, the media content may not be watermarked as played out until the last frame of the media content has been played out. In still other implementations, watermarks may be inserted into the media content at predetermined frame number intervals, such as every 2400 frames, for example, or at predetermined time intervals, such as every ten minutes, for example. That is to say, a playout watermark may be supplemented or modified, after playout of a predetermined first segment of the media content, during or after playout of a predetermined last segment of the media content, or at a plurality of predetermined intervals during playout of the media content.

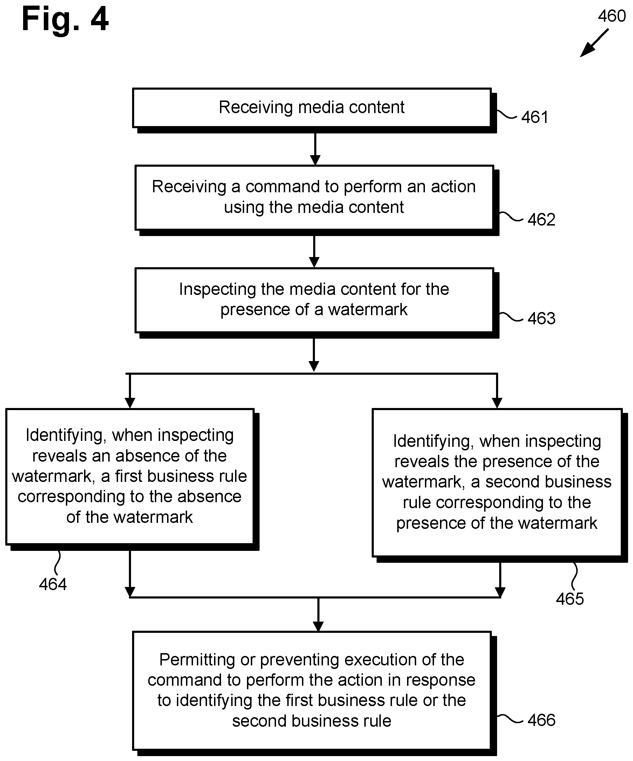

The functionality of user systems 140a/240a, 140b/240b, 140c, and user system software code 250a and 250b shown variously in Figures 1 and 2 will be further described by reference to Figure 4. Figure 4 shows flowchart 460 presenting an exemplary method for identifying constraints on media content usage using watermarks, according to one implementation. With respect to the method outlined in Figure 4, it is noted that certain details and features have been left out of flowchart 460 in order not to obscure the discussion of the inventive features in the present application. It is further noted that the media content referenced in the method outlined by flowchart 460 may refer to any of media content 130a, or watermarked media content 130b or 130c, while the user system referenced by that method may refer to any of user systems 140b/240b or 140c.

Referring to Figure 4 in combination with Figure 1, flowchart 460 begins with receiving media content, e.g., media content 130a, or watermarked media content 130b or 130c (action 461). As noted above, the media content may include content in the form of video games, music videos, animation, movies, or episodic TV content that includes episodes of TV shows that are broadcast, streamed, or otherwise available for download or purchase on the Internet or via a user application. Alternatively, or in addition, and as noted above, in some implementations the media content may be or include digital representations of persons, fictional characters, locations, objects, and identifiers such as brands and logos, for example, which populate a VR, AR, or MR environment. Moreover, the media content may depict virtual worlds that can be experienced by any number of users synchronously and persistently, while providing continuity of data such as personal identity, user history, entitlements, possessions, payments, and the like. As also noted above, the media content may be or include content that is a hybrid of traditional audio-video and fully immersive VR/AR/MR experiences, such as interactive video.

As shown in Figure 1, the media content may be received in action 461 by any of user system 140a, 140b, or 140c. Merely by way of example, and further referring to Figure 2, media content 130a may be received by user system software code 250a, executed by hardware processor 244a, or watermarked media content 130b/230b may be received by user system software code 250b, executed by hardware processor 244b, or watermarked media content 130c may be analogously received by user system 130c.

Continuing to refer to Figure 4 in combination with Figures 1 and 2, flowchart 460 further includes receiving a command to perform an action using the media content (action 462). The command received in action 461 may be received as an input provided by user 104, such as a manual input to an input device of user system 140a/240a in the form of a keyboard or touchscreen, for example, or as a voice command. The command may instruct user system 140a/240a to playout the media content using media player 247a of user system 140a/240a or media player 247b of user system 140b/240b, for example. Alternatively, or in addition, the command may instruct user system 140a/240a to transfer the media content to another user system, such as user system 140b/240b, as watermarked media content 130b/230b, or to copy the media content to another user system, such user system 140c, as watermarked media content 130c.

As noted above, the actions of playing out the media content, transferring the media content to another user system, or copying the media content to another user system each may result in a different type of watermark being applied to the media content. Thus, despite carrying the same primary media content payload, such as the same movie or other entertainment content, and perhaps carrying one or more watermarks in common, such as a system type watermark at predetermined location 333 in Figures 3A and 3B, each of watermarked media content 130b/230b and 130c carries at least one watermark that is different in type or location from the watermark(s) carried by media content 130a and one another.

Receiving the command to perform the action using the media content, in action 462, may be performed by any of user system 140a, 140b, or 140c, in response to the command having been issued by user 104. Referring to Figures 1 and 2 for example, that command may be received in action 462 by user system software code 250a, executed by hardware processor 244a of user system 140a/240a, or by user system software code 250b, executed by hardware processor 244b of user system 140b/240b, or analogously by user system 140c.

Referring to Figure 4 in combination with Figures 1, 2, and 3A, flowchart 460 further includes inspecting, by any of user systems 140a/240a, 140b/240b, or 140c, the media content for the presence of a watermark (action 463). As noted above, user systems 140a/240a, 140b/240b, and 140c may take the form of desktop computers, smartphones, smart TVs, set-top boxes, laptop computers, tablet computers, digital media players, game consoles, or wearable communication devices such as smartwatches, AR viewers, or VR headsets, to name a few examples.

As further noted above, the watermark(s) in the media content, when present, may be found at one or more predetermined locations. In some implementations, as also noted above, the watermark(s) may take the form of visual watermark(s) imperceptible to a viewer of the media content carrying those visual watermark(s). As shown in Figure 3A for example, a visual watermark may be present at one or more of predetermined locations 333, 334a, 334b, 334c, 334d, 336a, 336b, and 336c, which, according to the exemplary implementation shown in Figure 3A, are predetermined regions of video frame 332A. Video frame 332A is a single exemplary video frame of media content 130a/330a. It is emphasized that predetermined locations 333, 334a, 334b, 334c, 334d, 336a, 336b, and 336c for watermarks may be present in all of the video frames of the media content, or a subset of those video frames, i.e., less than all of the video frames of the media content.

Alternatively, or in addition, and as also noted above, the watermark(s) included in the media content may include one or more audio watermarks imperceptible to a human viewer of the media content. Thus, in various implementations, the media content may include one or more visual watermarks, one or more audio watermarks, or one or more visual watermarks and one or more audio watermarks. In implementations in which the media content includes one or more audio watermarks, the predetermined locations for those one or more audio watermarks could be respective predetermined timestamps of an audio track of the media content.

Thus, the inspecting performed in action 463 may include inspecting for visual watermark(s) at predetermined location 333 for a system type watermark, and/or predetermined locations 334a, 334b, 334c, and 334d for playout watermarks, and/or predetermined locations 336a, 336b, and 336c for copy watermarks, and/or at one or more predetermined timestamps of the audio track of the media content for audio watermark(s). Inspecting the media content for the presence of a watermark may be performed by user system software code 250a, executed by hardware processor 244a of user system 140a/240a, for example, or by user system software code 250b, executed by hardware processor 244b of user system 140b/240b, or analogously by user system 140c.

Continuing to refer to Figure 4 in combination with Figures 2 and 3A, flowchart 460 further includes identifying, when inspecting reveals an absence of a watermark in action 463, a first business rule corresponding to the absence of the watermark (action 464). In some implementations, the first business rule identified in action 464, as well as the second business rule alternatively identified in action 465 described below may be included in software code 250a and 250b. However, in other implementations those business rules may be stored in separate business rules database 125, either stored locally on user systems 140a/240a, 140b/240b, and 140c, or, as shown in Figure 1, remote from user systems 140a/240a, 140b/240b, and 140c but accessible to user systems 140a/240a, 140b/240b, and 140c via communication network 120 and network communication links 122.

As noted above, the absence of a watermark at predetermined location 333 indicates that there are no restrictions on the types of system that may playout the media content. In addition, the absence of a watermark at predetermined locations 334a, 334b, 334c, and 334d indicates that the media content is eligible to be played out. Moreover, the absence of a watermark at predetermined locations 336a, 336b, and 336c indicates that the media content is eligible to be copied. Thus, the first business rule identified in action 464 based on the absence of watermarks in the media content is that there are presently no restrictions on the use of the media content. The identification of the first business rule in action 464 may be performed by user system software code 250a, executed by hardware processor 244a of user system 140a/240a, for example, or by user system software code 250b, executed by hardware processor 244b of user system 140b/240b, or analogously by user system 140c.

It is noted that in some implementations, the absence of a watermark such as "X" at a predetermined location in media content may be denoted, not by the absence of any watermark at that predetermined location, but by the absence of a specific watermark, e.g., "X." For example, in those implementations the presence of a null watermark such as "O" at any of the predetermined locations inspected in action 463 may be interpreted as absence of the watermark being inspected for in action 463, thereby resulting in identification of the first business rule in action 464.

Continuing to refer to Figure 4 in combination with Figures 2 and 3A, flowchart 460 further includes identifying, when inspecting reveals the presence of a watermark in action 463, a second business rule corresponding to the presence of the watermark (action 465). As noted above, the presence of a watermark at predetermined location 333 may indicate a restriction on the types of system that may playout the media content. In addition, the presence of a watermark at one or more predetermined locations 334a, 334b, 334c, and 334d indicates that the media content has been played out a respective one or more times. Moreover, the presence of a watermark at one or more predetermined locations 336a, 336b, and 336c indicates that the media content has been copied a respective one or more times.

Thus, the second business rule identified in action 465 based on the presence of a watermark or watermarks in the media content may be a permission or a prohibition of one or more of playout of the media content or copying of the media content, or whether or the media content 330a is eligible playout by a specific user system. That is to say, the second business rule may permit or prevent one or more of playout of the media content by a user system, transmission of the media content to another user system for playout, copying the media content to another user system, or may specify one or more types of user systems by which playout of the media content is permitted. The identification of the second business rule in action 465 may be performed by user system software code 250a, executed by hardware processor 244a of user system 140a/240a, for example, or by user system software code 250b, executed by hardware processor 244b of user system 140b/240b, or analogously by user system 140c.

Continuing to refer to Figure 4 in combination with Figures 2 and 3A, flowchart 460 further includes permitting or preventing execution of the command to perform the action commanded in action 462, in response to identifying the first business rule or the second business rule (action 466). In use cases in which one of user systems 140a/240a, 140b/240b, or 140c identifies the first business rule in action 464, that user system permits execution of the command, for instance by permitting playout, transfer for playout, or copying of the media content regardless of the system type of user system 140a/240a, 140b/240b, or 140c.

Conversely, where one of user systems 140a/240a, 140b/240b, or 140c identifies the second business rule in action 465 that second business rule may specify that the commanded execution be permitted or prevented depending upon the watermarking state of media the content. By way of example, where the command received in action 462 commands playout of the media content of media content, and where predetermined locations 334a, 334b, and 334c each contain a playout watermark, but predetermined location 334d does not, the second business rule permits executing playout of the media content. However, where each of predetermined locations 334a, 334b, 334c, and 334d includes a respective playout watermark, further playout of the media content will be prevented in action 466, and so forth for copying or performing any other watermark constrained action using the media content. Action 466 may be performed by user system software code 250a, executed by hardware processor 244a of user system 140a/240a, for example, or by user system software code 250b, executed by hardware processor 244b of user system 140b/240b, or analogously by user system 140c.

In use cases in which the first business rule or the second business rule permits executing the action commanded in action 462, the media content is watermarked to record execution of the commanded action. For example, where the commanded action is copying of the media content and execution of that action is permitted in action 466, a copy watermark will be added to the media content by the user system performing the copying, at one of predetermined locations 336a, 336b, or 336c, and so forth for any watermark constrained action permitted to be executed in action 466.

In some use cases, adding a watermark may cause a watermark, such as "X," to be present at a predetermined location at which there was previously no watermark. However, in use cases in which absence of an inspected for watermark is indicated by the presence of a null watermark, e.g., "O," as discussed above by reference to action 464, that null watermark may be modified or replaced when the commanded action is permitted in action 466. By way of example, null watermark "O" at predetermined location 366a may be modified or replaced to appear as the watermark "X," i.e., "O" → "X" when copying of the media content is permitted in action 466.

With respect to the method outlined by Flowchart 460, it is noted that actions 461, 462, 463, 464, and 466, or actions 461, 462, 463, 465, and 466 may be performed as an automated method from which human participation other than input of the command received in action 462 may be omitted.

Thus, the present application discloses systems and methods for identifying constraints on media content usage using watermarks. The present watermarking solution advances the state-of-the-art to enable systems receiving media content to identify constraints on the use of that media content by reference to watermarks embedded in the media content, thereby obviating any need for a separate communication channel with a host system of the media content. Moreover, the systems and methods disclosed by the present application advantageously enable automatic identification, by a user system, of constraints on the use of the media content by the user system, without negatively affecting the experience of a user utilizing the user system to consume the content.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present claims.

## Claims

1. A method for use in a system, the method comprising:
receiving, by the software code executed by the hardware processor, a media content;
receiving a command to perform an action using the media content;
inspecting the media content for a presence of a watermark;
identifying when inspecting reveals an absence of the watermark, a first business rule corresponding to the absence of the watermark;
identifying when inspecting reveals the presence of the watermark, a second business rule corresponding to the presence of the watermark; and
permitting or preventing executing of the command to perform the action, in response to identifying the first business rule or the second business rule.

2. The method of claim 1, wherein the media content comprises audio-video (AV) content.

3. The method of claim 2, wherein the watermark comprises:
(i) at least one visual watermark imperceptible to a human viewer of the media content;
(ii) at least one audio watermark imperceptible to the human viewer of the media content; or
(iii) at least one visual watermark and at least one audio watermark each imperceptible to the human viewer of the media content.

4. The method of claim 2 or 3, wherein inspecting the media content is performed at one or more predetermined locations within the AV content for the presence of the watermark.

5. The method of claim 4, wherein the one or more predetermined locations comprise predetermined regions within each of at least some video frames of the AV content or a predetermined timestamp of an audio track of the AV content.

6. The method of at least one of claims 1 to 5, further comprising:
supplementing or modifying the watermark, in response to executing the command to perform the action.

7. The method of claim 6, wherein supplementing the watermark comprises inserting an additional watermark at a predetermined location within the media content, and wherein modifying the watermark comprises replacing the watermark with another watermark.

8. The method of claim 6 or 7, wherein the action comprises playout of the media content, and wherein supplementing or modifying the watermark occurs:
(i) after playout of a predetermined first segment of the media content;
(ii) during or after playout of a predetermined last segment of the media content; or
(iii) at a plurality of predetermined intervals during playout of the media content.

9. The method of at least one of claims 1 to 8, wherein the second business rule permits or prevents at least one of playout of the media content using a media player, transmission of the media content to another system for playout, or copying the media content to another system.

10. The method of at least one of claims 1 to 9, wherein the second business rule specifies one or more types of systems by which playout of the media content is permitted.

11. A system comprising a hardware processor and a system memory storing a software code, the hardware processor being adapted to execute the software to perform the method of any of claims 1-10.
